# EUROPÄISCHE PATENTANMELDUNG

(11) **EP 0 694 869 A2**
(43) Veröffentlichungstag der Anmeldung: **31.01.1996**
(21) Anmeldenummer: 95107386.5
(22) Anmeldetag: 16.05.1995
(51) Int. Cl.: G06K 19/04

(54) **Datenträgerhalter**

(30) Priorität: 28.07.1994 DE 9412696 U
(71) Anmelder: ROTRING INTERNATIONAL GMBH & Co KG, D-22525 Hamburg (DE)
(72) Erfinder: Nippert, Thomas, D-20257 Hamburg (DE)

(57) **Zusammenfassung**

Ein Datenträger in Form eines Schreibgerätes ist mit einer Kammer (30), in der ein elektronischer Datenträger aufnehmbar ist, wobei ein Bereich der die Kammer (30) umgebenden Wandung (31, 32) für Schreib- und/oder Leseimpulse durchlässig ist, um das Schreiben von Informationen auf einen in der Kammer (30) aufgenommenen elektronischen Datentträger und/oder das Lesen von Informationen davon in Zusammenwirkung mit einem externen Gerät zu ermöglichen.

## Beschreibung

Die Erfindung betrifft einen Datenträger-Halter.

Es gibt elektronische Datenträger, in die mit Hilfe von dazu hergerichteten Geräten Informationen eingeschrieben und/oder aus denen mittels solcher Geräte Informationen ausgelesen werden können, ohne daß dafür ein galvanischer Kontakt zwischen irgendwelchen Anschlüssen des elektronischen Datenträgers und entsprechenden Gegenstücken des Lese/Schreib-Gerätes erforderlich ist. Die Informationen, d.h. die Schreib- und/oder Leseimpulse, werden dabei in Form von elektrischen oder magnetischen oder elektromagnetischen (z.B. Licht) Feldern übertragen.

Es ist Aufgabe der Erfindung, für solche elektronischen Datenträger ein erweitertes Anwendungsgebiet bereitzustellen.

Diese Aufgabe wird gelöst durch einen Datenträger-Halter mit den Merkmalen des Schutzanspruchs 1. Vorteilhafte Ausgestaltungen ergeben sich aus den Unteransprüchen.

Der erfindungsgemäße Datenträger-Halter weist eine Kammer auf, in der ein elektronischer Datenträger aufgenommen werden kann.

Ein Bereich der die Kammer umgebenden Wandung ist für Schreib- und/oder Leseimpulse durchlässig. Ein in der Kammer aufgenommer elektronischer Datenträger läßt sich beschreiben oder auslesen, indem der Datenträger-Halter als Ganzes in oder an ein externes Gerät gelegt wird, das die Datenübertragung steuert. Dieses Gerät kann mit einem Computer verbunden sein, der die Informationen bereitstellt oder weiterverarbeitet.

Ein mit einem elektronischen Datenträger versehener erfindungsgemäßer Datenträger-Halter kann auf vielfältige Weise genutzt werden. Zum Beispiel kann das Bedienungspersonal in einem Restaurant damit ausgerüstet sein, um die gespeicherten Daten (z.B. die Zuordnung von Kosten zu einem bestimmten Konto) zu aktualisieren und zu registrieren. Ein erfindungsgemäßer Datenträger-Halter mit elektronischem Datenträger könnte auch die Funktion eines Schlüssels übernehmen, wenn ein externes Lesegerät an einer Tür eingebaut ist, die sich nur dann öffnet, wenn die Information auf dem elektronischen Datenträger mit einer vorgegebenen Kennung übereinstimmt.

In einer vorteilhaften Ausführungsform ist der Datenträger-Halter als Schreibgerät gestaltet. Wenn das Schreibgerät eine Schreibmine hat (z.B. Kugelschreiber oder mit nachfüllbaren Minen versehener Bleistift), kann der Datenträger neben der Schreibmine aufnehmbar sein.

Vorzugsweise ist der Datenträger in einer Ausnehmung, z.B. in einer zur Längsachse des Schreibgeräts parallelen Bohrung, aufnehmbar, die in einem Zwischenstück vorgesehen ist, das das Vorderteil des Schreibgeräts mit dem Schaft verbindet. Das Zwischenstück besteht vorzugsweise aus Kunststoff. Dann ist es sowohl für magnetische als auch für elektrische Felder durchlässig. Ein solcher Aufbau des Schreibgeräts ist einfach und kostengünstig und schafft einen sicheren Halt für den elektronischen Datenträger. Da der Datenträger neben der Schreibmine angeordnet ist, befindet er sich in geringem Abstand zu der Außenseite des Schreibgerätes, so daß auch elektrische oder magnetische Felder, die mit der Entfernung schnell abfallen, zum Schreiben und/oder Lesen genutzt werden können.

Ein Schreibgerät ist eine besonders praktische Ausführungsform des erfindungsgemäßen Datenträger-Halters, weil es allgemein benötigt und mitgeführt wird. Es sind jedoch viele andere Gestaltungen denkbar, z.B. als Brieföffner, als Schlüsselanhänger, usw.

Im folgenden wird die Erfindung anhand eines Ausführungsbeispiels näher beschrieben. Die Zeichnungen zeigen in
- Figur 1: eine teilweise angeschnittene Längsansicht eines erfindungsgemäßen Datenträger-Halters, der als Kugelschreiber ausgeführt ist, und
- Figur 2: eine vergrößerte Teilansicht des Kugelschreibers aus Figur 1, wobei das Vorderteil, ein Zwischenstück und der vordere Bereich des Schafts auseinandergezogen dargestellt sind.

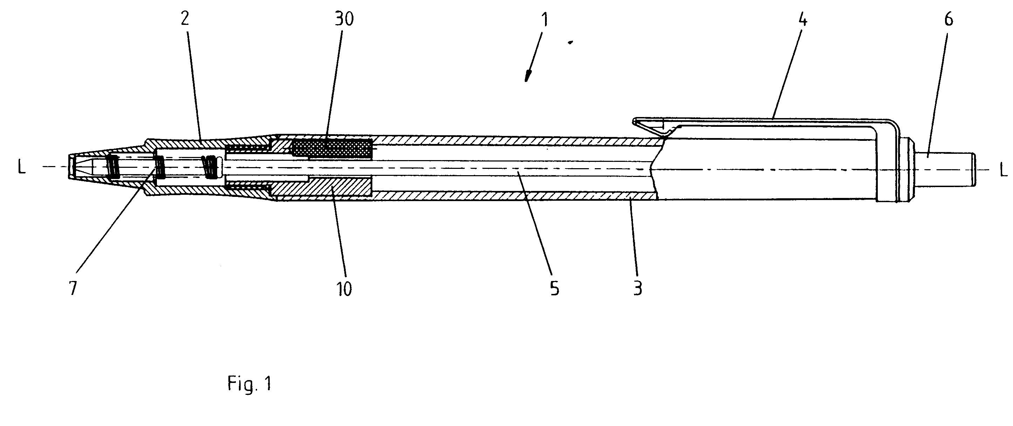

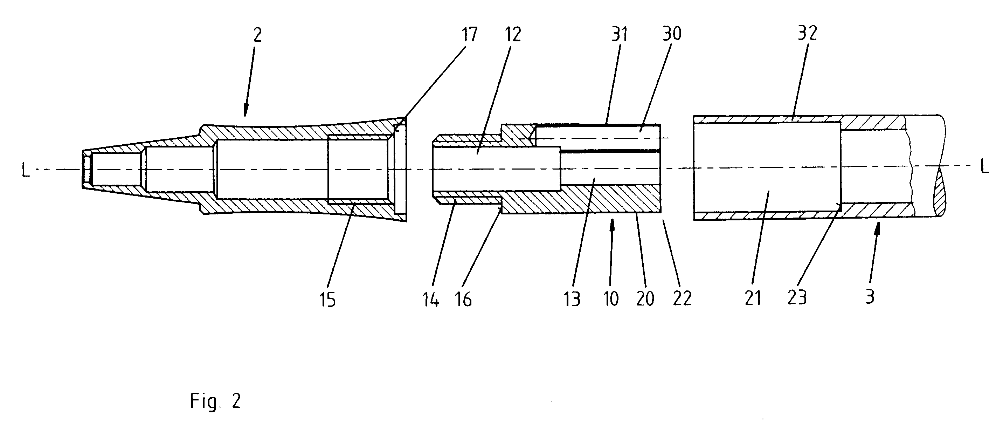

Der in den Figuren 1 und 2 gezeigte Datenträger-Halter ist als Schreibgerät gestaltet, und zwar als Kugelschreiber 1.

Der Kugelschreiber 1 hat ein Vorderteil 2 und einen Schaft 3, an dessen Ende ein Clip 4 angebracht ist. Im Inneren des Kugelschreibers 1 ist eine längsverschiebbare Schreibmine 5 geführt, deren Betätigungsmechanismus 6 am hinteren Ende des Schafts 3 nicht im einzelnen dargestellt ist. Eine Schraubenfeder 7 im Vorderteil 2 ist in üblicher Weise auf Druck vorgespannt.

Das Vorderteil 2 und der Schaft 3 sind durch ein Zwischenstück 10 verbunden, siehe insbesondere Figur 2. Entlang der Längsachse L-L des Kugelschreibers 1, auf der auch die Schreibmine 5 verläuft, ist das Zwischenstück 10 mit einer Bohrung 12 versehen.

Der hintere Bereich der Bohrung 12 hat einen geringeren Durchmesser und dienst als Minenführung 13. In seinem vorderen Bereich trägt das Zwischenstück 10 ein Außengewinde 14, das in ein Innengewinde 15 im hinteren Bereich des Vorderteils 2 paßt. Wenn die Gewinde 14 und 15 ineinandergeschraubt sind, liegt eine Schulter 16 des Zwischenstücks 10 an einem Ansatz 17 des Vorderteils 2 an.

Der hintere Bereich 20 des Zwischenstücks 10 ist zylindrig ausgebildet und paßt in eine entsprechende Ausnehmung 21 am vorderen Ende des Schafts 3. Wenn der zylindrige Bereich 20 ganz in die Ausnehmung 21 hineingeschoben ist, liegt sein Ende 22 an einem Ansatz 23 an.

Das Zwischenstück 10 kann in der Ausnehmung 21 festgeklemmt oder auch verklebt sein. Bei einer alternativen Ausgestaltung ist der hintere Bereich des Zwischenstücks 10 ebenso wie der vordere Bereich mit einem Außengewinde versehen, das in ein entsprechendes Innengewinde am vorderen Ende des Schafts 3 paßt.

Parallel zu der Längsachse L-L verläuft in dem Zwischenstück 10 eine von dessen hinterem Ende her angesetzte Bohrung, die eine Ausnehmung 30 bildet. Die Ausnehmung 30 dient zum Aufnehmen eines elektronischen Datenträgers, der z.B. 3,2 mm Durchmesser und 12 mm Länge hat. In Figur 1 ist die Ausnehmung 30 doppelt schraffiert.

Damit Daten oder Informationen in einen von der Ausnehmung 30 aufgenommen elektronischen Datenträger eingeschrieben oder daraus gelesen werden können, muß die Wandung, die die Ausnehmung 30 im zusammengebauten Zustand des Kugelschreibers 1 umgibt, für Schreib- und/oder Leseimpulse durchlässig sein. Im Ausführungsbeispiel besteht diese Wandung aus einem Teil 31, der an dem Zwischenstück 10 ausgebildt ist, und einem Teil 32 im vorderen Bereich des Schafts 3. Das Zwischenstück 10 und der Schaft 3 bestehen aus Kunststoff, so daß die Wandung 31, 32 sowohl für elektrische als auch für magnetische Felder durchlässig ist. Falls der Schaft 3 an seiner Außenseite mit einem metallischen Überzug versehen ist, der für elektrische Felder undurchlässig ist, muß gegebenenfalls der Bereich, in dem im zusammengebauten Zustand des Kugelschreibers 1 die Ausnehmung 30 liegt, ausgespart werden. Das Vorderteil 2 kann aus Metall bestehen.

Wenn das Zwischenstück 10 mit dem Schaft 3 verklebt ist, kann ein einmal in die Ausnehmung 30 eingesetzter elektronischer Datenträger später nicht mehr ausgetauscht werden. Je nach Anwendungsfall ist jedoch eine Austauschmöglichkeit erwünscht. Dann empfiehlt es sich, das Zwischenstück 10 in der Ausnehmung 21 nicht festzukleben, sondern nur festzuklemmen oder alternativ in diesen Bereichen eine Gewindeverbindung oder eine andere lösbare Verbindung vorzusehen.

Um Daten ein- bzw. auszulesen, wird der Kugelschreiber 1 in die dazu vorgesehene Öffnung eines externen Schreib- und/oder Lesegerätes gesteckt, wo in der Nähe der Ausnehmung 30 mit dem elektronischen Datenträger ein Schreib- und/oder Lesekopf angeordnet ist. Der Informationsfluß wird über das Schreib- und/oder Lesegerät gesteuert.

## Patentansprüche

1. Datenträger-Halter, mit einer Kammer (30), in der ein elektronischer Datenträger aufnehmbar ist, wobei ein Bereich der die Kammer (30) umgebenden Wandung (31, 32) für Schreib- und/oder Leseimpulse durchlässig ist, um das Schreiben von Informationen auf einen in der Kammer (30) aufgenommenen elektronischen Datenträger und/oder das Lesen von Informationen davon in Zusammenwirkung mit einem externen Gerät zu ermöglichen.

2. Datenträger-Halter nach Anspruch 1, dadurch gekennzeichnet, daß er als Schreibgerät (1) gestaltet ist.

3. Datenträger-Halter nach Anspruch 2, dadurch gekennzeichnet, daß das Schreibgerät (1) eine Schreibmine (5) hat und der Datenträger neben der Schreibmine (5) aufnehmbar ist.

4. Datenträger-Halter nach Anspruch 3, dadurch gekennzeichnet, daß in einem Zwischenstück (10), das das Vorderteil (2) des Schreibgeräts (1) mit dem Schaft (3) verbindet, eine Ausnehmung (30) vorgesehen ist, in der der Datenträger aufnehmbar ist.

5. Datenträger-Halter nach Anspruch 4, dadurch gekennzeichnet, daß die Ausnehmung (30) eine achsparallele Bohrung ist.

6. Datenträger-Halter nach Anspruch 4 oder 5, dadurch gekennzeichnet, daß das Zwischenstück (10) aus Kunststoff besteht.

7. Datenträger-Kalter nach Anspruch 1, dadurch gekennzeichnet, daß er als Brieföffner gestaltet ist.

8. Datenträger-Halter nach Anspruch 1, dadurch gekennzeichnet, daß er als Schlüsselanhänger gestaltet ist.
